# EUROPEAN PATENT APPLICATION

(11) **EP 4 412 182 A1**
(43) Date of publication of application: **07.08.2024**
(21) Application number: 24155152.2
(22) Date of filing: 01.02.2024
(51) Int. Cl.: H04L 67/02

(54) **SYSTEM AND METHOD FOR SECURE BROWSING**

(30) Priority: 02.02.2023 US 202363442787 P
(71) Applicant: UNIX-CY Ltd, 5884739 Holon (IL)
(72) Inventor: VINOKUROV, Reuvein, MODIIN (IL); GERSTENSANG, Chananel, MODIIN (IL)
(74) Representative: Plasseraud IP

(57) **Abstract**

The is provided a technique of secure browsing from a client device to a webserver. The client device detects a submission of a credential of interest; intercepts a browsing request comprising the credential of interest; modifies the credential of interest in accordance with predefined modification rules, thus giving rise to a modified credential; replaces the credential of interest in the browsing request by the modified credential such that the modified credential is hidden from a user; and sends a browsing request with the modified credential to the webserver to be extracted thereby for further user's authentications as a part of a webserver authentication process. Thus, the provided technique enables concealing the actual credentials involved in the browsing process from the users, thereby reducing the risk of inadvertent credential leaks resulting from human errors.

## Description

### TECHNICAL FIELD

The invention relates to methods and systems for secure browsing. More particularly, the invention relates to the methods and system for secure browsing comprising protection from cyber-attacks initiated with the help of methods of Social Engineering.

### BACKGROUND

With advancements in technology, Internet and digital devices comes a dire need for secure browsing. As technology has become more advanced, so have the methods of cyber criminals and the threats they place upon digital devices and the data stored within them.

Secure browsing is the practice of safeguarding one's computer and personal data from malicious activity and unauthorized access. It is the process of protecting oneself from potential cyber threats when browsing the Internet. This includes maintaining strong passwords, being aware of online scams, avoiding malicious links, and implementing the latest security measures. Secure browsing involves staying up to date with the latest security patches, using secure connections such as a Virtual Private Network (VPN), and using anti-virus software. These measures ensure an additional layer of security that can help keep malicious actors out.

One of the most concerning issues that has arisen from the world of cyber security is Social Engineering attacks.

Social Engineering attacks are on the rise and are becoming an ever-increasing problem for individuals and businesses. According to the 2020 Verizon Data Breach Investigation Report, Social Engineering attacks have been the leading cause of data breaches for the respective past three years.

Social engineering attacks are a type of cyberattack that rely on human interaction to gain access to sensitive information or resources. These attacks use deception, manipulation, and other psychological tactics to manipulate victims into giving up confidential information or access to secure systems. Examples of social engineering attacks include phishing emails, vishing (phone-based attacks), and pretexting (posing as someone else to obtain sensitive information).

While traditional security solutions (e.g. antiviruses, firewalls, VPNs, etc.) can help protect against malicious files and websites and/or detect and remove malicious software, they are not designed to identify and block social engineering techniques.

One of the most popular methods of preventing Social Engineering attacks is implementing policies that require users to use strong passwords and change them frequently. Another common solution for preventing social engineering attacks is to provide users with security training and awareness programs to educate them on the dangers of social engineering.

While established methods can contribute to minimizing the likelihood of a successful attack, they do not eliminate the fundamental reasons why the attack was successful in the first place - specifically, humans' vulnerability to falling victim to Social Engineering attacks.

### GENERAL DESCRIPTION

The inventors have recognized and appreciated that there is a need to enhance browsing security by mitigating the risk of unauthorized access through credentials acquired via social engineering.

In accordance with the presently disclosed subject matter, the risk of inadvertent credential leaks resulting from human errors can be reduced by concealing the actual credentials involved in the browsing process from users.

In accordance with certain aspects of the presently disclosed subject matter, there is provided a method of secure browsing from a client device to a webserver. The method comprises, by the client device: detecting a submission of a credential of interest (e.g. a password, an e-mail, a username, etc.); intercepting a browsing request comprising the credential of interest; modifying the credential of interest in accordance with predefined modification rules, thus giving rise to a modified credential; replacing the credential of interest in the browsing request by the modified credential such that the modified credential is hidden from a user; and sending to the webserver a browsing request with the modified credential to be extracted thereby for further user's authentications as a part of a webserver authentication process. Optionally, the client device can detect and modify a plurality of credentials of interest in the intercepted browsing request.

In accordance with further aspects and, optionally, in combination with other aspects of the presently disclosed subject matter, the client device can send the intercepted browsing request upon modifying the credential of interest. Alternatively, the client device can generate a new browsing request with the modified credential of interest and block the intercepted request.

In accordance with further aspects and, optionally, in combination with other aspects of the presently disclosed subject matter the client device can intercept the browsing request only if detected the submission of the credential of interest. Alternatively, the client device can intercept the browsing request irrespective of detecting the submission of credential of interest and release the requests without modification if no credential of interest is detected.

In accordance with further aspects and, optionally, in combination with other aspects of the presently disclosed subject matter, the client device can always modify the detected credential of interest, or the client device can modify the credential of interest only when it meets predefined criteria. For example, wherein the credential of interest is a password, the client device can modify the password only if detected that the intercepted browsing request is a password resetting request.

In accordance with further aspects and, optionally, in combination with other aspects of the presently disclosed subject matter, the client device can, prior to operations above, to intercept a browsing request and check if the request involves one or more credentials; release the intercepted browsing request when no credentials discovered; and when at least one credential of the one or more credentials is discovered, blocking the intercepted browsing request if it is not addressed to a whitelisted destination. When one or more credentials include the credential of interest, the method can further comprise providing the above operations related to credential's modification when the intercepted browsing request is addressed to a whitelisted destination.

In accordance with other aspects of the presently disclosed subject matter, there is provided a client device configured to perform, when browsing a webserver, the method stages as detailed above.

In accordance with other aspects of the presently disclosed subject matter, there is provided a computer program product implemented on a non-transitory computer usable medium having computer readable program code embodied therein to cause the computer to perform, when browsing a webserver, the method stages as detailed above.

### BRIEF DESCRIPTION OF THE DRAWINGS

In order to understand the invention and to see how it can be carried out in practice, embodiments will be described, by way of non-limiting examples, with reference to the accompanying drawings, in which:
**FIG. 1** illustrates a generalized block diagram of a client device configured in accordance with certain embodiments of the presently disclosed subject matter;
**FIG. 2** illustrates a generalized flowchart of secure browsing in accordance with certain embodiments of the presently disclosed subject matter;
**FIG. 3** illustrates a generalized block diagram of a client-side credential module configured in accordance with certain embodiments of the presently disclosed subject matter;
**FIG. 4** illustrates a generalized diagram of secure browsing in accordance with certain embodiments of the presently disclosed subject matter;
**FIG. 5** illustrates a generalized block diagram of an exemplary organization's computing environment comprising the client devices configured in accordance with certain embodiments of the presently disclosed subject matter; and
**FIG. 6** illustrates a generalized diagram of a multi-layer embodiment of secure browsing in accordance with the presently disclosed subject matter.

It will be appreciated that, where considered appropriate, reference numerals may be repeated among the figures to indicate corresponding or analogous elements. A letter after a reference numeral, such as **"100a",** indicates that the text refers specifically to the element having that particular reference numeral. A reference numeral in the text without a following letter, such as **"100"** refers to any or all of the elements in the figures bearing that reference numeral.

### DETAILED DESCRIPTION

In the following detailed description, numerous specific details are set forth in order to provide a thorough understanding of the invention. However, it will be understood by those skilled in the art that the presently disclosed subject matter may be practiced without these specific details. In other instances, well-known methods, procedures, components and circuits have not been described in detail so as not to obscure the presently disclosed subject matter.

Unless specifically stated otherwise, as apparent from the following discussions, it is appreciated that throughout the specification discussions utilizing terms such as "processing", "intercepting", "modifying", "detecting" or the like, refer to the action(s) and/or process(es) of a computer that manipulate and/or transform data into other data, said data represented as physical, such as electronic, quantities and/or said data representing the physical objects. The terms "computer" and/or "computing device" should be expansively construed to cover any kind of hardware-based electronic device with data processing capabilities including, by way of non-limiting example, client devices and processing and memory circuitry (PMC) therein disclosed in the present application.

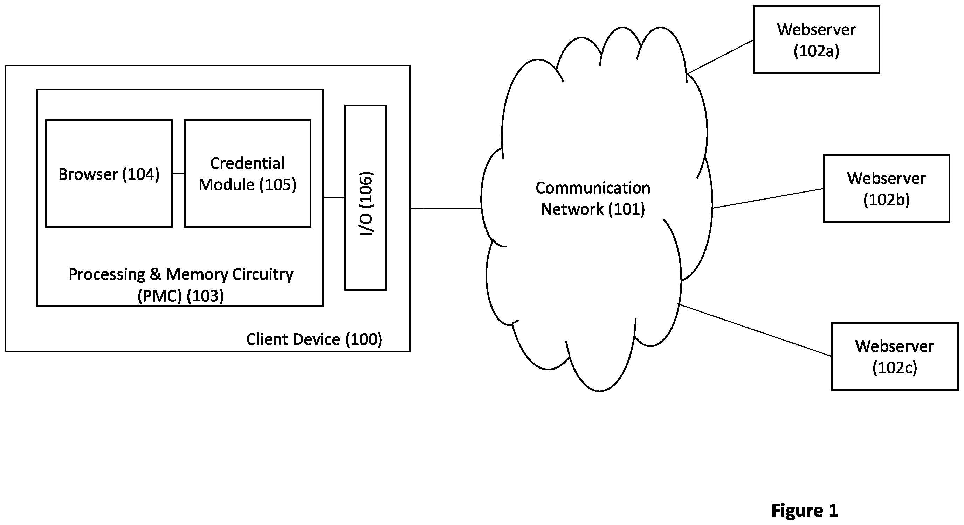

Bearing this in mind, attention is drawn to FIG. 1a, illustrating a generalized block diagram of a client device configured in accordance with certain embodiments of the presently disclosed subject matter.

A client device **100** is configured to communicate with webservers **102** (denominated as **102a, 102b, 102c**) via a communication network **101** (e.g. Internet).

Unless specifically stated otherwise, the term "client device" refers throughout the description to any computing device with browsing capabilities. The term "webserver" refers to any host capable of handling and serving websites, applications, and/or web services and content.

Client device **100** can communicate with webserver **102** in accordance with any of suitable protocols and combinations thereof (e.g. HTTP (hypertext transfer protocol), HTTPS (Hypertext Transfer Protocol Secure), WAP (Wireless Application Protocol WAP (Wireless Application Protocol), CSS (Cascading Style Sheets), etc.).

Client device **100** comprises a processing and memory circuitry (PMC) **(103).** PMC **103** comprises a processor and a memory (not shown separately within the PMC) and is operatively connected to an Input/Output interface **106.**

PMC **103** is configured to execute several program components in accordance with computer-readable instructions implemented on a non-transitory computer-readable storage medium. Such executable program components are referred to hereinafter as functional modules comprised in the PMC. The functional modules can be implemented in any appropriate combination of software with firmware and/or hardware.

The functional modules in PMC **103** include a browser **104** and a credential module **105.**

Browser **104** is a client side of web-browsing software (e.g. Google Chrome, Mozilla Firefox, Microsoft Edge, Safari, etc.). Browser **104** is configured to provide a user interface enabling access, navigation and interaction (including rendering) with web content provided by the webservers.

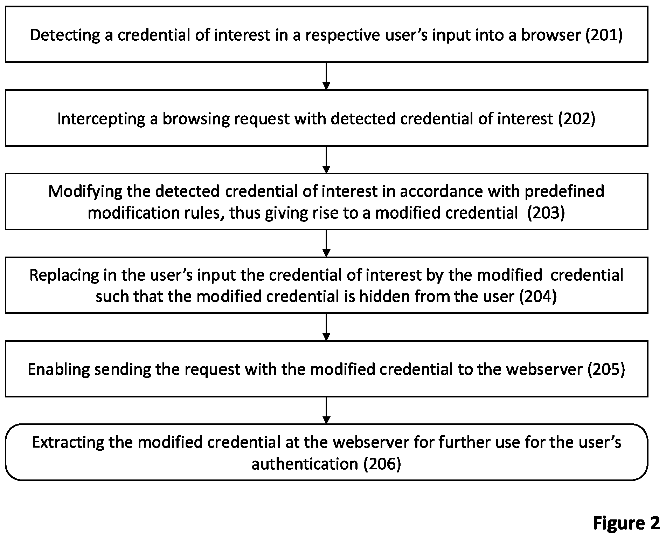

Credential module **105** is configured to intercept, analyze and manipulate the browsing requests submitted on the client device. Configuration of credential module **105** and operation thereof is further detailed with reference to **Figs. 2 - 5****.**

Unless specifically stated otherwise, the term "browsing request" refers throughout the description to a message prepared by a client side of web-browsing software and initiating communication with a webserver.

Typically, the browsing request is HTTP request. Initiating HTTP communication can include receiving user input of destination address (by entering URL or clicking on a link), generating HTTP browsing request that includes necessary authentication data (i.e. user name and password) entered in a browsing interface, submitting the generated HTTP request and sending thereof. For further security, the password and other sensitive information in the HTTP request can be encrypted during the SSL/TLS (Secure Sockets Layer/Transport Layer Security) handshake phase when establishing a secure and encrypted communication channel between the client device and the webserver.

Referring to **FIG. 2****,** there is illustrated a generalized flowchart of secure browsing. In accordance with certain embodiments of the presently disclosed subject matter, credential module **105** monitors generating a browsing request from client device **100** to webserver **102** to detect **(201)** submission of a credential of interest (e.g. username, password, email, etc.) into a browsing interface.

Credential module **105** analyses the generated browsing request to discover the existence of the credential of interest. and intercepts **(202)** the request when the credential of interest is discovered.

Unless specifically stated otherwise, the term "credentials" used in the specification should be expansively construed to cover any repeatable authentication information usable in the user's browser (e.g. password, user name, e-mail, answers on security questions, etc.).

It is noted that in certain embodiments of the invention, credential module **105** can be configured to analyze the browsing requests prior to their submitting to send, to discover that that a given request comprises the credential of interest, and to intercept only such requests once such requests are submitted. In other embodiments, credential module **105** can intercept any browsing requests upon submission, analyze them after interception, and release the requests without the credential of interest without further involvement.

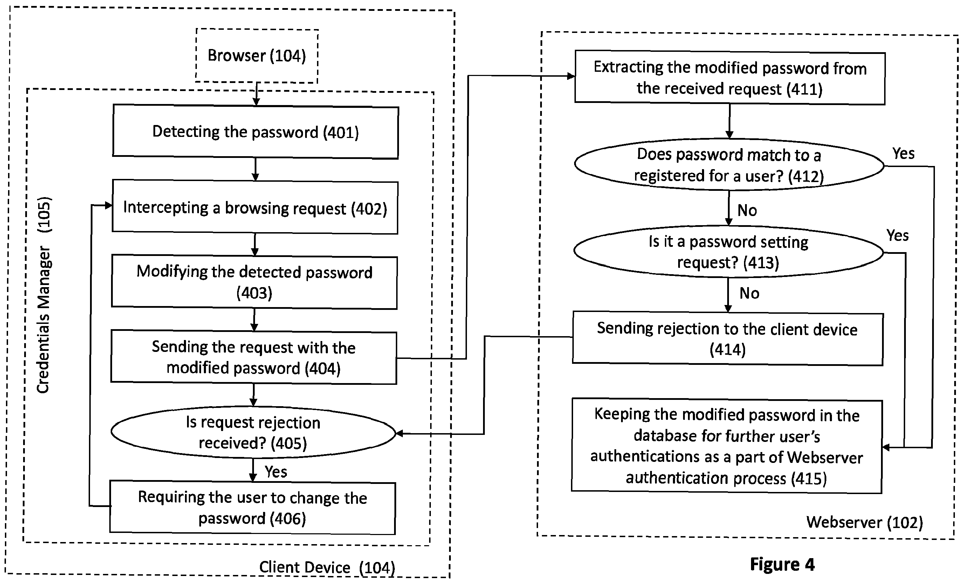

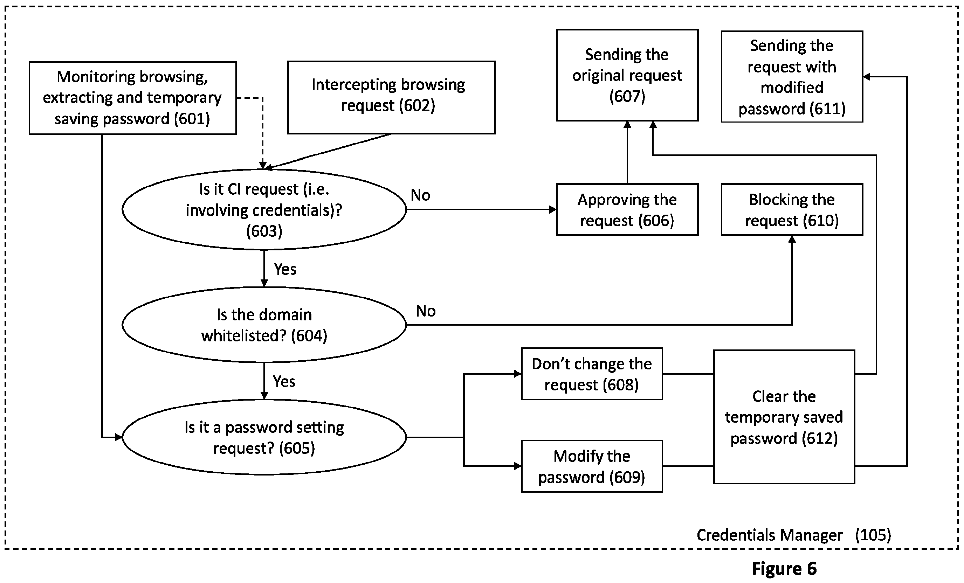

As will be further detailed with reference to **FIG. 4** and **FIG. 6****,** credential module **105** modifies **(203)** the detected credential of interest in accordance with predefined modification rules, thus giving rise to a modified credential.

Unless specifically stated otherwise, the terms "credential's modification" and alike refer throughout the specification to any changes of credential's content (e.g. inserting special characteristics, replacing at least part of the characteristics, encrypting, etc.).

In some embodiments, credential module always modifies the detected credential of interest. A non-limiting example of such embodiment is detailed with reference to **FIG. 4****.**

In other embodiments, credential module modifies the detected credential of interest only when it meets predefined criteria (e.g. requirement for a new password, etc.). A non-limiting example of such embodiment is detailed with reference to **FIG. 6****.**

Credential module **105** further replaces **(204)** the credential of interest in the browsing request by the modified credential such that the modified credential is hidden from the user.

It is noted that credential module **105** can be configured to enable selection of one or more credentials to specify credential-involved requests. Likewise, credential module **105** can be configured to enable selection of one or more credentials of interest to be modified and replaced.

Credential module **105** enables **(205)** sending the request with the modified credential to webserver **102.** In certain embodiments credential module **105** can release the intercepted CI request upon modifying credential therein. In other embodiments, credential module **105** can block the intercepted request and generate and send, instead, a new request with the modified credential.

Upon receiving the request, webserver extracts **(206)** the modified credential for further use for the user's authentication. Following the modification, the webserver receives the modified credential in all authentication-related traffic until a renewed user-input credential is required.

Thus, the modified credential of interest becomes the actual credential involved in the browsing process whilst being concealed from the user. The detailed above modifying the entered credential of interest during the runtime (before the browsing request is sent from the client device) creates a gap between the credential that is known to the user and an actual credential that is in use at the webserver. Thereby the harm of credential leakage attacks can be reduced as an attacker will not be able to authenticate to the webserver without possession of the modification algorithm and/or the modification keys.

It is noted that the credentials to discover, the credential(s) of interest and/or modification rules can be configurable and, optionally, can differ for different destinations of the browsing request and/or for different security profiles assigned to respective users.

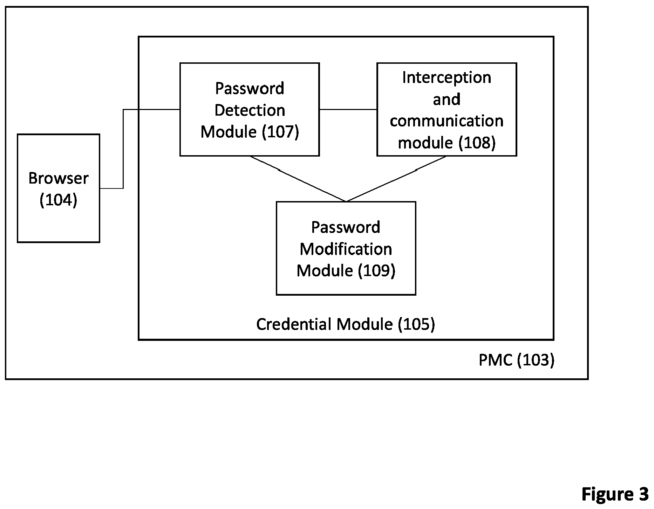

A generalized block diagram of credential module **105** is illustrated in **FIG. 3****.** In accordance with certain embodiments of the presently disclosed subject, credential module **105** is a client-side executable program component implemented in PMC **103** of client device **100.**

Credential module **105** is operatively connected to browser **104** and comprises a password detection module **107,** an interception and communicating module **108** and a password modification module **109** operatively connected therebetween.

By way of non-limiting example, credential module **105** can be implemented with the help of following executable program components or any suitable combination thereof:
- Browser Extension configured to to intercept, analyze and manipulate the traffic that is sent in the browsing sessions via the browser extension APIs;
- Executable agent configured to intercept and manipulate traffic via installation of Root CA certificate or via process hooking;
- Mobile Autofill Application configured to manipulate passwords that are submitted by the user;
- Mobile keyboard configured to manipulate passwords that are submitted by the user;
- Mobile Device Management (MDM) application with MDM permissions and policies and configured to intercept and manipulate the traffic by local proxying.

Referring to **FIG. 4****,** there is illustrated a generalized flowchart of the secure browsing in accordance with certain embodiments of the presently disclosed subject matter.

For the purpose of illustration only, the description of **Fig. 4** is provided for a password as the credential of interest. Those skilled in the art will readily appreciate that the teachings of the presently disclosed subject matter are, likewise, applicable to other user's credentials.

By way of non-limiting example, credential module **105** can comprise a browser extension configured to monitor, via an API provided by the browser, the user interface and to capture inputs provided thereto. Thus, the browser extension can detect **(401)** a password as has been submitted by a user and, when detected, intercept **(402)** the respective browsing request.

By way of non-limiting example, the browser extension can detect submission of a password by detecting fields of type "password" (e.g. masked fields) in HTML Code in a body of the request and then extract the password.

It is noted that, depending on the embodiments, operations **(401)** and **(402)** can be provided also in an opposite order or concurrently. For example, credential module **105** can be configured to intercept all submitted browsing requests and release the requests when no password is detected.

Credential module **105** (e.g. browser extension) further modifies **(403)** the detected password, irrespective of the intended use for which the password has been entered (e.g. logging in, registration, changing password, etc.). Credential module **105** enables sending **(404)** the browsing request with the modified password to webserver **102.**

Upon receiving the browsing request, webserver **102** extracts **(411)** the modified password and checks **(412)** if the extracted password matches the one previously registered for the respective user. When a match is found (i.e. the modified password has been previously received and saved by a server-side of the browser) or when the browsing request is identified **(413)** as a password setting request (e.g. registration or change password request), webserver **102** keeps **(415)** the modified password for further authenticating the user. When the match is not found, webserver **102** sends **(414)** authentication rejection to client device **100.**

Responsive to receiving **(405)** the authentication rejection, credential module **105** requires **(406)** the user (e.g. browser extension generates a pop-up alert) to change the password. Optionally, in some embodiments, in order to regain access to the system a user initiates password recovery process with no involvement of credential module **105.**

After the user inputs a new password, credential module **105** further modifies the new password in a manner described above and enables sending to the webserver a password setting request with the newly modified password. This newly modified password is kept **(415)** by the webserver in the database for further user's authentications as a part of webserver authentication process.

As opposed to the password managers known in the conventional art, the above password transmutations are provided transparently to the users, while the resulting modified passwords remain unknown to them. Furthermore, as opposed to the password managers known in the conventional art, passwords that are known to the users are not stored anywhere and the modified (and unknown to the users) passwords are stored merely in a webserver database.

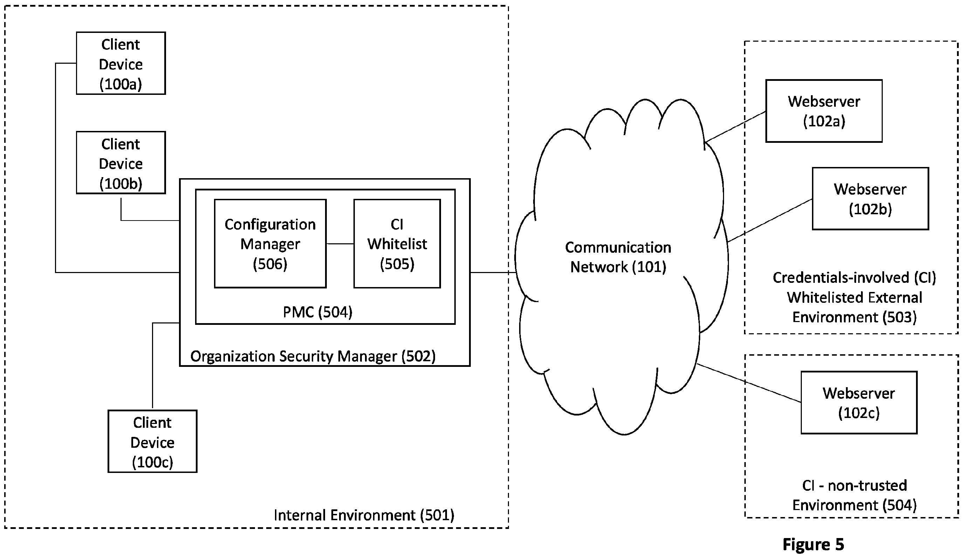

Referring to **FIG. 5****,** there is illustrated a generalized block diagram of an exemplary organization's computing environment comprising the client devices configured in accordance with certain embodiments of the presently disclosed subject matter. The illustrated computing environment of the exemplified organization comprises an internal organization environment **501** and an external environment. Part **503** of the external environments is whitelisted and another part **504** is non-trusted as detailed below.

The internal organization environment **113** comprises a plurality of client devices **100** (denominated as **101a, 101b** and **101c**) operatively connected to an organization security manager **502.** Organization security manager **502** is configured to maintain a database of domains approved by the organization for credentials-involved (CI) communication. Such database (or other data structure) is referred to hereinafter as a CI whitelist **505.** Depending on the organization's requirements, CI whitelist **505** can be continuously or periodically updated.

Accordingly, webservers included in the CI whitelist (illustrated as webservers **102a** and **102b**) belong to CI whitelisted external environment **503,** and any other webservers (illustrated as **102c**) belong to CI non-trusted external environment **504.**

Each client device **100** is configured to analyze browsing requests addressed to any of webservers **102** and to discover existence of one or more credentials in a manner detailed herein.

Requests comprising (and/or supposed to comprise) user's credentials are referred to hereinafter as credentials-involved (CI) requests.

By way of non-limiting example, the existence of credentials can be assessed by credential module **105** by detection of high entropy strings, detection of organizational email addresses, detection of password patterns, extracting passwords and/or user names from the input fields, etc. The analyzed data can include data informative of the body of the request, headers of the request, address of the webserver, request identifier, method of the request, URL of the request, etc.

If no credential discovered, client device **100** sends the browsing request to the requested webserver without any further involvement and irrespective of the CI whitelist **505.**

Upon discovering credentials, client device **100** blocks the CI browsing requests to destinations belonging to CI non-trusted external environment **504.** Optionally, upon blocking the request, client device **100** can prompt the user with an option to request approval in a manner defined by the organization.

When the destination in CI browsing request is in CI-whitelisted external environment **503,** client device **100** sends the request thereto while, optionally, modifying credentials in the request in a manner detailed with reference to **FIG. 2****.**

In certain embodiments, client device **100** can be configured to contact security manager **502** in order to match a required destination to CI whitelist **505.** Alternatively or additionally, client device can be configured to maintain an updatable local copy of CI whitelist **505.**

Thus, while not affecting non-CI browsing, the proposed solution enables blocking credentials-involved outbound communication to non-trusted domains, thereby enhancing organization's protection against social engineering attacks.

By way of non-limiting example, CI whitelist **505** can be obtained with the help of machine learning model configured to recognize, monitor and learn the organization's traffic patterns between client devices **100** and webservers **102** during sufficient time period (e.g. several weeks).

The model can be configured to identify webservers, users (e.g. with the help of recognized email addresses) and credentials-involved traffic therebetween based on capturing and analyzing the browsing requests.

The model can generate CI whitelist **505** in accordance with a number of users accessing the respective webservers, number of CI requests to respective webservers, amount of the respective traffic, etc. Optionally, the CI whitelist can comprise different sub-whitelists for different credentials (e.g. the same domain can be allowable for a browsing request comprising, merely, an e-mail address and can be blocked for a browsing request comprising a password).

Optionally, organization security manager **502** can further comprise a configuration manager **506** operatively connected to CI whitelist **505** and client devices **100.**

Some organizations may require a granulated security policy. Configuration manager **506** can enable tailoring measures of social engineering security in accordance with organization security policy with respect to different users and user groups. For example, configuration manager can configure the local copies of CI whitelist in accordance with security profiles of respective users. Likewise, configuration manager **506** can configure the credentials to discover, the credential(s) of interest and/or modification rules in credential modules **105** in accordance with security policy of the organization.

It is noted that the teachings of the presently disclosed subject matter are not bound by the client device described with reference to **FIG. 1****,** **FIG. 3** and **FIG. 5****.** Equivalent and/or modified functionality can be consolidated or divided in another manner and can be implemented in any appropriate combination of software with firmware and/or hardware.

Referring to **FIG. 6****,** there is illustrated a generalized diagram of a multi-layer embodiment of secure browsing in accordance with the presently disclosed subject matter.

In the illustrated embodiment, by the first security layer credential module **105** enables sending the credentials-involved requests merely to the trusted webservers and by the second security layer credential module **105** enables setting the modified passwords (and/or other credential) unknown to the users.

Optionally, secure browsing can involve additional layers of security (not shown in **FIG. 6**) implemented independently or in conjunction with the two layers above.

By way of non-limiting example, the credential modification can include strong (optionally multi-key) encryption of the original credential and/or of an initially modified credential.

By way of another non-limiting example, detection of password (and/or other credential) submission can initiate a process of multi-factor authentication (MFA), wherein the respective browsing request and/or encryption keys can be released only upon successful MFA authentication at the client device.

For the purpose of illustration only, the following description is provided for a password as the credential of interest. Those skilled in the art will readily appreciate that the teachings of the presently disclosed subject matter are, likewise, applicable to other user's credentials.

As illustrated, credential module **105** monitors a browsing request, extracts the password (when available) and temporary saves **(601)** the extracted password.

Depending on embodiment, concurrently, before or upon extracting the password, credential module **105** intercepts **(602)** the submitted browsing request and checks **(603)** if the request involves credentials.

By way of non-limiting example, credential module **105** can use the extracted password to search the submitted browsing request in order to discover existence of the detected password.

By way of another non-limiting example, credential module **105** can search the browsing request to discover e-mails with organization's domain name (and/or other predefined domains), usernames from a list provided by organization, etc.

When no credentials discovered, credential module **105** approves **(606)** the request and the client device sends **(607)** the original request to the desired destination.

When credential discovered in the request, credential module **105** checks the destination **(604)** and blocks **(610)** the CI request if it is not addressed to a whitelisted destination.

For CI browsing requests addressed to whitelisted destinations, credential module **105** checks **(605)** if the browsing request is a password setting request.

By way of non-limiting example, credential module **105** can search over respective HTTP/s request to find the previously extracted and temporary saved password (or parts thereof). The location of the password in HTTP code (and/or the respective query string after URL address) is indicative of the intended use for which the password has been submitted.

Examples of login, sign-in, and change password query strings are illustrated in **Table 1.**

**Table 1**

| System Name | Login URL | Reset Password URL |
|---|---|---|
| System #1 | https://1.example.com/api/logi n-api/v1/login | https://1.example.com/api/logi n-api/v1/password/new |
| System #2 | https://2.example.com/auth/log in/ | https://2.example.com/auth/res etPassword/ |
| System #3 | https ://3 .example.com/u/login/i dentifier | https://3.example.com/u/login/ password |
| System #4 | https://4.example.com/rest/auth enticate | https://4.example.com/rest/cha ngepassword |

For password setting requests the credential module **105** modifies **(609)** the password as detailed above and enables sending **(611)** the request with the modified password. As opposed to embodiment detailed with reference to **FIG. 4****,** credential module **105** in the illustrated example does not modify **(608)** the password in login or other non-password setting requests.

Prior to sending **(607)** a non-modified browsing request or sending **(611)** a modified browsing request, credential module **105** clears **(612)** the temporarily saved password.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

It will also be understood that the invention contemplates a computer program being readable by a computer for executing the method of the invention. The invention further contemplates a non-transitory computer-readable memory tangibly embodying a program of instructions executable by the computer for executing the method of the invention.

Those skilled in the art will readily appreciate that various modifications and changes can be applied to the embodiments of the invention as hereinbefore described without departing from its scope, defined in and by the appended claims.

## Claims

1. A method of secure browsing from a client device to a webserver, the method comprising, by the client device:
detecting a submission of a credential of interest;
intercepting a browsing request comprising the credential of interest;
modifying the credential of interest in accordance with predefined modification rules, thus giving rise to a modified credential;
replacing the credential of interest in the browsing request by the modified credential such that the modified credential is hidden from a user; and
sending to the webserver a browsing request with the modified credential to be extracted thereby for further user's authentications as a part of a webserver authentication process.

2. The method of Claim 1, wherein the client device sends the intercepted browsing request upon modifying the credential of interest or wherein the client device generates a new browsing request with the modified credential of interest and blocks the intercepted request.

3. The method of Claims 1 or 2, wherein the client device detects the credential of interest into a browsing interface.

4. The method of any one of Claims 1 - 3, wherein the client device intercepts the browsing request only if detected the submission of the credential of interest.

5. The method of any one of Claims 1 - 3, wherein the client device intercepts the browsing request irrespective of the detecting the submission of credential of interest and releases it without modification if no credential of interest is detected.

6. The method of any one of Claims 1 - 5, wherein the client device always modifies the detected credential of interest.

7. The method of and one of Claims 1 - 5, wherein the client device modifies the credential of interest only when it meets predefined criteria.

8. The method of Claim 7, wherein the credential of interest is a password, and wherein the client device modifies the password only if detected that the intercepted browsing request is a password resetting request.

9. The method of any one of Claims 1 - 8, wherein the credential of interest to be modified is configurable.

10. The method of any one of Claims 1 - 9, comprising detecting and modifying a plurality of credentials of interest in the intercepted browsing request.

11. The method of any one of Claims 1 - 10, wherein the credential of interest is selected from the group comprising a password, an e-mail and a username.

12. The method of any one of Claims 1- 11, further comprising, prior to operations of Claim 1,
intercepting a browsing request and checking if the request involves one or more credentials;
releasing the intercepted browsing request when no credentials discovered; and
when at least one credential of the one or more credentials is discovered, blocking the intercepted browsing request if it is not addressed to a whitelisted destination.

13. The method of Claim 12, wherein the one or more credentials include the credential of interest and the method further comprising providing the operations of Claim 1 when the intercepted browsing request is addressed to a whitelisted destination.

14. A client device configured to perform the method stages of any one of Claims 1 -13 when browsing a webserver.

15. A computer program product implemented on a non-transitory computer usable medium having computer readable program code embodied therein to cause the computer to perform the method stages of any one of Claims 1 -13 when browsing a webserver.
